# EUROPEAN PATENT APPLICATION

(11) **EP 1 952 868 A2**
(43) Date of publication of application: **06.08.2008**
(21) Application number: 07024469.4
(22) Date of filing: 18.12.2007
(51) Int. Cl.: B01D 25/127

(54) **A continuous-belt type filter plate pack and a filtering machine therefor**

(30) Priority: 29.12.2006 IT RE20060162
(71) Applicant: Salis, Giuseppe, 42044 Gualtieri (RE) (IT)
(72) Inventor: Salis, Giuseppe, 42044 Gualtieri (RE) (IT)
(74) Representative: Gotra, Stefano

(57) **Abstract**

A continuous-belt type filter pack (1) exhibits a bottom plate (2), a top plate (7) and at least an intermediate plate (9) moved synchronously from an open position to a closed position by means for moving (12). A continuous-type belt (6), snakingly wound on the plates (2, 7, 9), is guided by means for guiding (13). The snaking orientation of the belt (6) defines a plurality of filtering tracts (6a, 6b, 6c, 6d) functioning as separator walls between the liquid to be filtered and the filtered liquid; a first series of connecting tracts (6') and a second series of connecting tracts (6") being equally sub-divided at opposite right and left ends of the filtering tracts (6a, 6b, 6c, 6d).

## Description

The invention relates to a continuous-belt type filter pack and a continuous belt.

The invention also relates to a filtering machine comprising the filtering pack.

The filtering pact, and the relative filtering machine, are applicable in all those manufacturing sectors where it is necessary to perform solid-liquid separating operations, and vice-versa, and liquid clarification operations.

To cite some examples, filtering machines are used in food and wine industries for clarifying drinks, in mechanical industries and chemical-pharmaceutical industries, for example for filtering lubricants and refrigerants in the first case and for processing pharmaceutical preparations in the second case.

In surface treatment industries for filtering galvanising baths, greasing baths, desmutting baths and in demudding phosphating baths.

A further sector where considerable application is made is in dehydration of muds in purifying plants, and more besides.

In the filtering sector, the prior art describes filtering machines known as filter presses.

Filter presses are defined by a series of horizontally-oriented plates, in which each plate between end plates of the series, exhibits a pair of oppositely-orientated cavities, each of which is covered by a single cloth filters.

A motor moves the series of plates alternatingly, from a closed position, in which each plate is in contact with a reciprocal plate, to an open position, in which each plate is detached from a reciprocal plate.

In the closed position, each plate defines, together with a contiguous plate, a filtering chamber communicating with an inlet, connected to a source of liquid to be filtered, and an outlet, connected to a recipient of filtered liquid.

Masses of filtered substances form in the chambers, which masses are known as cakes, which during opening of the plates are discharged by force of gravity into a collection tray positioned below the filtering machine.

The drawbacks of the above-described machines are that in plan view they are very large, due to a horizontal rather than a vertical piling of the plates, and to the high degree of manual work in the belt-cleaning operations between a filtering cycle, i.e. between an opening-and-closing cycle of the plates.

With these machines a constant presence of an operator is required, who, during opening of the plates, manually cleans the filter cloths.

The above-described cake-formation/cake discharge cycles are rather discontinuous, penalising the productivity of the machine.

To solve the above-cited drawbacks, continuous-belt filtering machines have been developed.

In this machines, it has been preferred to pile series of plates in a vertical direction, reducing the area of the machines in plan view, and the use of a continuous belt, wound between the plates, which during opening and closing of the plates is constantly moved by winding means which enable sliding of the belt on the filtering plates.

The winding development of the belt, defined by horizontal tracts functioning as separating walls and vertical tracts functioning as connections for the others, is arranged such that a filtering plate is contained between two consecutive horizontal tracts and a vertical tract.

As guide elements for the winding development of the belt, a plurality of guide rollers are provided, one for each plate, with a staggered arrangement with respect to the two lateral sides of the piled plates.

This configuration causes all the discharge of the cakes onto two opposite sides and therefore means that two collection trays have to be provided, adding to the size of the machine in plan-view.

Further, the arrangement of the plurality of rollers, which is necessary for the correct winding of the belt, leads to an increase in the overall space occupied by the machine in plan view.

Finally, during the unwinding of the belt a side thereof, which in a first filtering chamber is in direct contact with the liquid to be filtered, when reaching a subsequent filtering chamber, is tipped over and is in direct contact with one of the filtering cavities.

This leads to contact of a portion of the dirty belt, having impurities collected in the preceding filtering chamber, with the filtered liquid outlet in the successive filtering chamber.

A further known filtering machine, described in patent no. US6,071,425, is made of a pack of filters having a vertical development, with a belt wound over the guide rollers.

In this machine too the arrangement of the plates is realised such that a filter plate is located between two consecutive horizontal tracts and a vertical connecting tract.

To enable discharge of the cakes on one side only, thus using only one collection tray and consequently reducing the plan-view size of the machine, half the series of horizontal tracts of the belt are inactive.

To perform the discharge on one side only, then, overall productivity of the machine is penalised.

In this case too the staggered arrangement of the rollers on two sides of the plate pack penalises the overall size in plan view of the machine.

The aim of the present device is to realise a continuous-belt filter plate pack which facilitates discharge of the cakes on one side only of the machine and which is at the same time compact.

A second aim of the present device is to realise a continuous-belt filter plate pack which optimises the surface area in plan view in relation to the overall mass of the filtering machine.

A further aim of the present device is to realise a continuous-belt filter plate pack which requires a low amount of maintenance and cleaning.

This aim and further advantages are attained by the invention in object, as it is characterised in the accompanying claims.

Further characteristics and advantages of the present invention will better emerge from the detailed description that follows of an embodiment of the invention, illustrated by way of non-limiting example in the accompanying figures of the drawings, in which:
figure 1 is a perspective view of a continuous-belt filter plate pack made according to the invention, and defined by trio of filtering plates.
figure 2 is a transversal section of the continuous-belt filter plate pack according to line II-II of figure 1;
figure 3 is a longitudinal section of a continuous-belt filter plate pack, defined by a plurality of filtering plates;
figure 4 is an axonometric view of an intermediate plate of the continuous-belt filter plate pack, seen from below;
figure 5 is an axonometric view of an intermediate plate of the continuous-belt filter plate pack, seen from above;

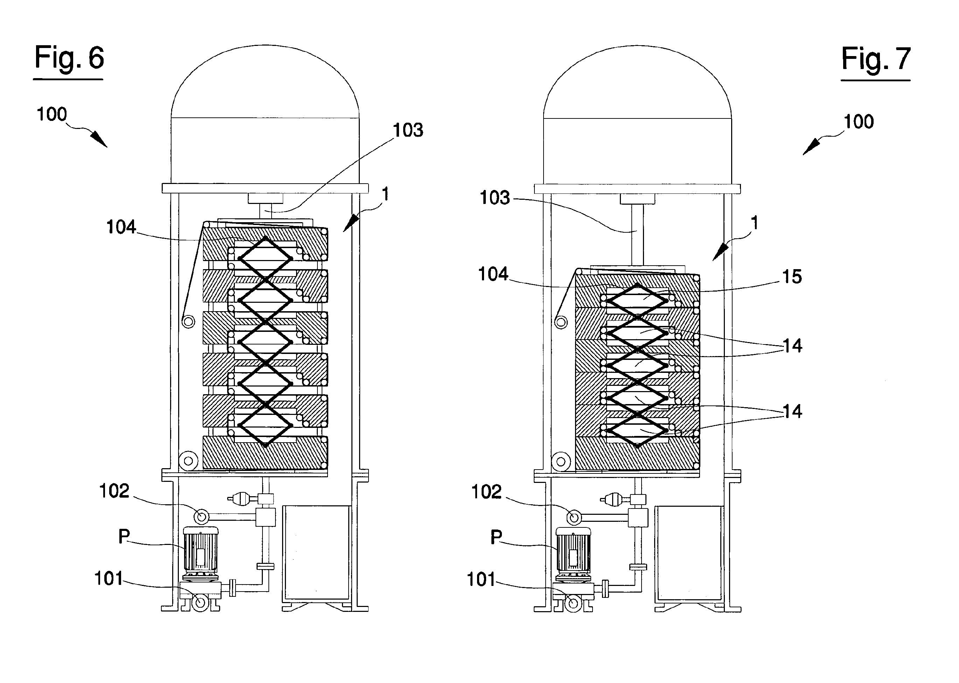

figure 6 is a functional diagram of a filtering machine equipping the filter plate pack of figure 3, in a position in which the plates are opened to discharge a cake;
figure 7 is a functional diagram of a filtering machine equipping the filter plate pack of figure 3, in a plate closure/cake-forming position.

With reference to the figures of the drawings, 1 denotes in its entirety a continuous-belt filter plate pack.

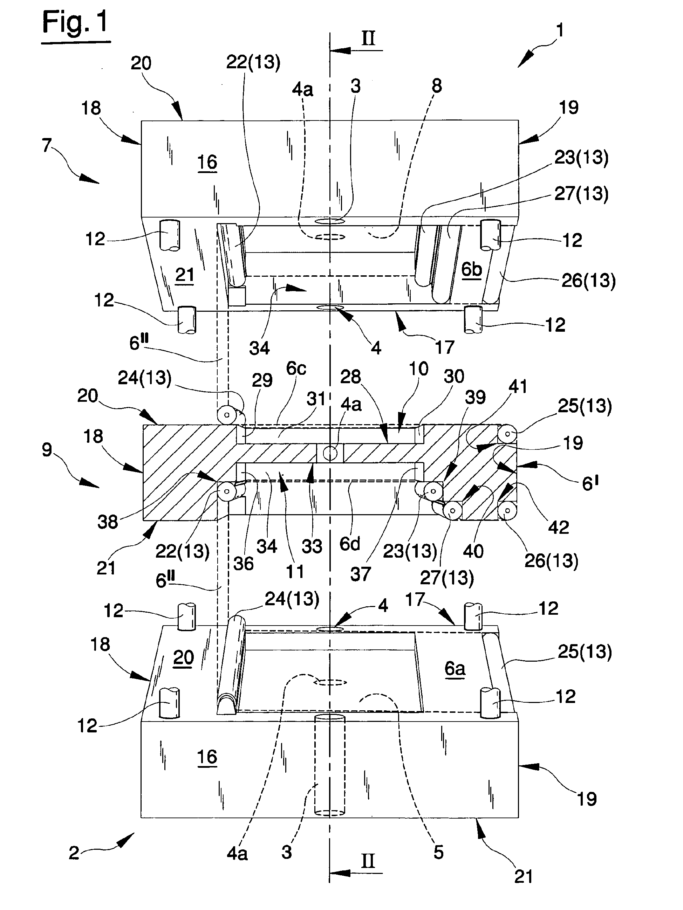

In the minimum embodiment illustrated in figure 1, the plate pack 1 exhibits a bottom plate 2, a top plate 7 and at least an intermediate plate 9, interposed between the other two plates.

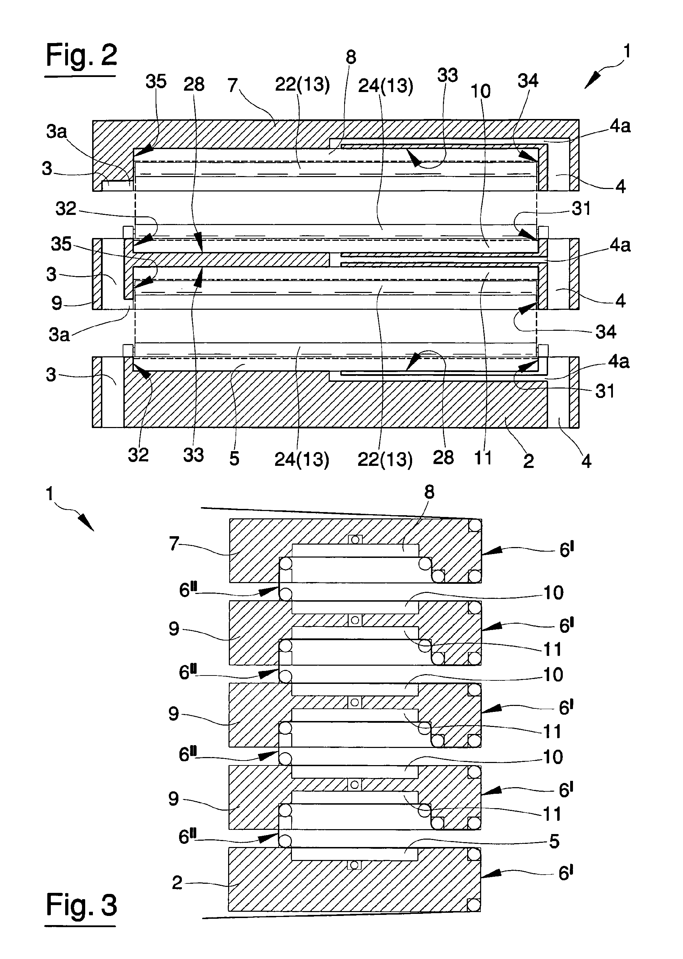

As can be seen in figures 1 and 2, the plate pack 1 configuration includes at least an intermediate plate 9 and a preferably vertical column, while as illustrated in the remaining figures 3, 4, 5, the intermediate plates 9 are four in number.

The bottom plate 2, which is substantially sheet-shaped, exhibits an inlet 3 for the liquid to be filtered, an outlet 4 for the filtered liquid, and a first upper cavity 5, the latter functioning as a draining surface.

Similarly, the top plate 7 is also substantially sheet-shaped and exhibits an inlet 3, an outlet 4 and a first lower cavity 8, also functioning as a draining surface.

The only difference between the bottom plate 2 and the top plate 7, apart from the different location and conformation of the respective cavities 5, 8, is in the hydraulic communication of the upper cavity 5 and the lower cavity 8 with the inlet 3 and the outlet 4.

While the first upper cavity 5 is in communication with only the outlet 4, the first lower cavity 8 is in communication with the inlet 3 and the outlet 4.

The at least an intermediate plate 9 includes the inlet 3, the outlet 4, a second upper cavity 10 and a second lower cavity 11, each functioning as a draining surface, each second cavity 10, 11 being in communication with the outlet 4 and only the second lower cavity 11 communicating with the inlet 3.

Each plate 2, 7, 9 exhibits a substantially parallelepiped shape, defining an upper surface 20 and a lower surface 21, a first and second lateral surface 18, 19, having a smaller surface development, and a front surface 16 and a back surface 17.

Quadrangular-based plates exhibiting lateral surfaces 18, 19 of same surface sizes to the front surface 16 and the back surface 17 are within the ambit of protection of the present invention.

Means for moving, denoted by 12, act on the plate pack 1 in order to define a pilling of the plates 2, 7, 9 preferably in a vertical direction, and facilitate a synchronous displacement therein, from a closed position, in which each plate is in contact with a respective contiguous plate, to an open position, in which each plate is detached from the respective contiguous plate.

As shown in figure 3, the means for moving 12 facilitate formation of a first closed filter chamber 14, obtained by nearing the first upper cavity 5 to the second lower cavity 11, and a second filter chamber 15, obtained by contact of the first lower cavity 8 and the upper cavity 10 when the plates 2, 7, 9 are in contact in the closed position.

A continuous belt 6 is snakingly wound on the plates 2, 7, 9, and means for guiding 13 engage the belt 6 to guide it in the snaking direction, facilitating the positioning of the belt 6 on the cavities 5, 8, 10, 11 of the plates 2, 7, 9.

The belt 6 is defined by filtering tracts 6a, 6b, 6c, 6d, each in contact with a respective cavity 5, 8, 10,11 and functioning as separator walls between the liquid to be filtered and the filtered liquid, a first series of connecting tracts 6' and a second series of connecting tracts 6", respectively connected to the right and left opposite ends of the horizontal filtering tracts 6a, 6b, 6c, 6d.

The means for guiding 13 act on the belt 6 to locate the filtering tracts 6a, 6b, 6c, 6d on the respective upper surfaces 20 and the lower surfaces 21 of each plate 2, 7, 9.

With reference to the filter tracts 6a, 6b, 6c, 6d, the surface area thereof is smaller than the surface area of the upper surfaces 20 or lower surfaces 21 of the plates 2, 7, 9.

At least a series of connecting tracts 6' and 6", apart from the filter tracts 6a, 6b, 6c, 6d, surrounds a side of the filter chamber 14, 15.

As shown in figure 1, the second series of connecting tracts 6" is internal of the plates 2, 7, 9.

By exclusion, the first series of connecting tracts 6' is external of the plates 2, 7, 9, preferably tangential to the lateral surface 19 of each plate 2, 7, 9.

The means for guiding 13 comprise a first plurality of primary rollers 22, 23, 24, engage on the belt filter tracts 6a, 6b, 6c, 6d, to facilitate the resting of the tracts on the respective cavities 5, 8, 10, 11, and a second plurality of auxiliary rollers 25, 26, 27, engaged on the remaining tracts of the belt 6', 6", to at least partially facilitate adherence of the tracts to the plates 2, 7, 9.

The first plurality of rollers, as shown in figure 1, is defined by a first roller 22, a second roller 23 and a third roller 24, while the second plurality of rollers is defined by a fourth roller 25, a fifth roller 26 and a sixth roller 27.

With reference to the cavities 5, 8, 10, 11, each upper cavity 5, 12 exhibits a parallelepiped shape, each defining a first bottom 28, preferably having a quadrangular perimeter, from which a first pair of transversal walls 29,30 develops, and a first pair of longitudinal walls 31, 32.

With reference to the lower cavities 8, 10, each is defined by a second bottom 33, preferably having a quadrangular perimeter, from which a second pair of longitudinal walls 34, 35 develops, as well as a second pair of transversal walls 36, 37.

One of the second pair of transversal walls 36, 37, preferably 36, exhibits a first seating 38, while the other, preferably 37, exhibits a second seating 39 and a third seating 40.

As illustrated in the figures, the seatings 38, 39, 40 are each defined by a step developing in a distancing direction from the respective lower cavity 8, 10.

With reference to the shape of any one of the lower cavities 8, 10, the steps develop externally of the respective first bottom 33.

The first seating 38 is substantially coplanar to the second seating 39, while the third seating 40 is contiguous and consecutive to the second seating 39 and develops externally of the second seating 39 and the second bottom 33.

The plate pack 1 includes a fourth seating 41 and a fifth seating 42.

The seatings 41, 42 are afforded at two edges obtained by the intersection of the upper surface 20 and the lower surface 21, with one of the lateral surfaces 19.

As illustrated in figures 1, 2, the first roller 22 is housed in the first seating 38, the second roller 23 is housed in the second seating 39, the sixth roller 27 is housed in the third seating 40, the fourth roller 25 is housed in the fourth seating 41 and finally the fifth roller 26 is housed in the fifth seating 42.

On the contrary, the third roller 24 is located on a respective upper surface 20 of the plates 2, 9, preferably at a transversal wall 29.

The fourth roller 25 and the fifth roller 26 are located in proximity of a first transversal wall 30, and a second transversal wall 37.

The plurality of primary rollers 22, 23, 24 is used for cleaning operations, the scraping being effected through the coupling thereto of scrapers of substantially known type, and for reducing all tension stress on the belt 6 during sliding movement thereof.

The inlet 3 and the outlet 4, visible in figure 2, are defined by two distinct single conduits crossing the plates 2, 7, 9 when the plates 2, 7, 9 are located in the closed position.

The inlet 3 is afforded in the space lying below the front surfaces 16 of each plate 2, 7, 9 and the longitudinal walls 32, 35 of the upper chamber 5, 10 and the lower chambers 8, 11.

The outlet 4 is opposite the inlet 3 and is afforded in the space underlying the back surfaces 17 of each plate 2, 7, 9 and the longitudinal walls 31, 34 of the upper chamber 5, 10 and the lower chamber 8, 11.

The inlet 3 is in direct communication with each respective lower cavity 8, 11 through a respective branch 3a opening above the lower cavities 8, 11 and above the respective filtering portions of belt 6.

The branches 3a open on a same side of the longitudinal walls 35.

The outlet 4 is in communication with each cavity, upper and lower 5, 8, 12, 13, via a respective branch 4a terminating on the first or second bottom 28, 33 of each cavity.

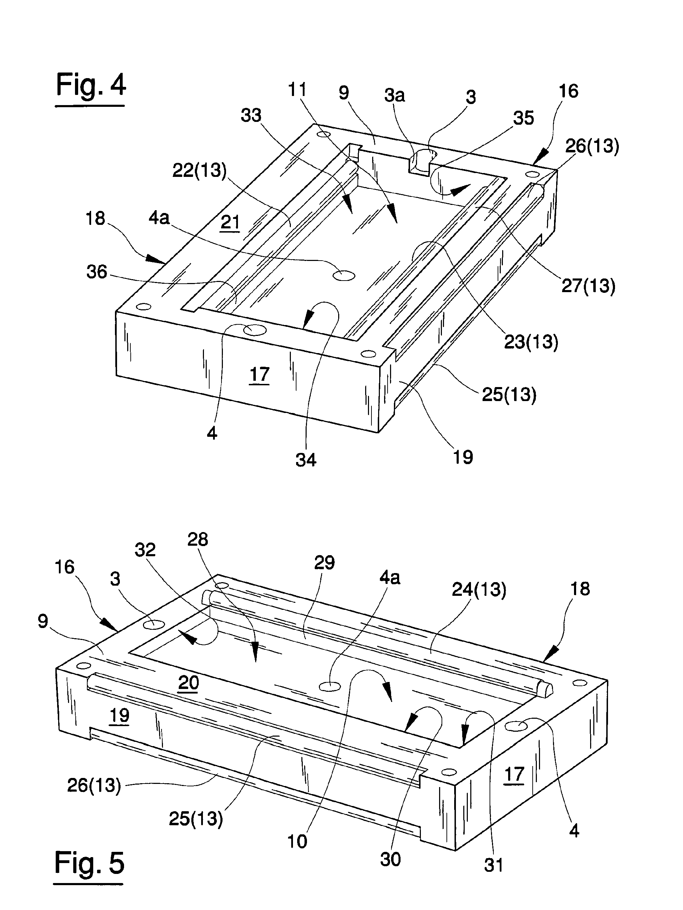

With reference to figures 4 and 5, 100 denotes a filter machine.

In figure 4 the machine 100 is in the cake-removal stage, with the plate pack 1 open, and in figure 5 the cake-forming stage is shown, with the plate pack 1 closed.

The machine 100 includes a pump P.

Via an aspiration conduit 101, the pump P removes filtered liquid and supplies it to the filter chambers 14, 15 through the inlet 3 and it is subsequently conveyed, via the outlet 4, to a discharge conduit 102.

The plate pack 1 is closed and opened by means for moving 12 defined by a hydraulic piston 103 and a pantograph 104 for facilitating synchronous movement of the plates.

The plate pack 1 and the relative filter machine 100 as described offer various advantages.

As can be seen in figure 5, the discharge of the cake is done on a same side of the machine 100.

This is done without penalising the filter surfaces, i.e. without disabling a filter chamber in an alternated sequence.

Further the filter tracts 6a. 6b, 6c, 6d of the belt exhibit a filter surface which is always opposite the relative cavity on which the tracts rest, preventing pollution of cavities and the introduction of filtered substances into the outlet.

Finally, the location of the means for guiding 13 and the rollers internally of the plate pack 1 leads to a reduction the area in transversal section occupied by the machine 100.

## Claims

1. A continuous-belt type filter pack, comprising:
a bottom plate (2), having a sheet-type development, exhibiting an inlet (3) for liquid to be filtered, an outlet (4) for filtered liquid, and a first upper cavity (5), functioning as a drainage cavity, the outlet (4) being in communication with the first upper cavity (5);
a top plate (7), having a sheet-type development, exhibiting an inlet (3) for the liquid to be filtered, an outlet (4) for the filtered liquid, and a first lower cavity (8), functioning as a drainage cavity, the outlet (4) being in communication with the first lower cavity (8);
at least an intermediate plate (9), interposed between the bottom plate (2) and the top plate (7), exhibiting the inlet (3), the outlet (4), a second upper cavity (10) and a second lower cavity (11), functioning as drainage cavities, each second upper cavity (10) and second and lower cavity (11) communicating with the outlet (4) and the second lower cavity (11) communicating with the inlet (3);
means for moving (12), defining a pile of the plates (2, 7, 9) preferably in a vertical direction, in order to facilitate a synchronous displacement of the plates (2, 7, 9) from a closed position, in which the first upper cavity (5) and the second lower cavity (11) form a first closed filtration chamber (14), and the first lower cavity (8) and the second upper cavity (10) form a second closed filtration chamber (15), to an open position, in which the cavities (5, 8, 10, 11) are detached;
a continuous belt (6) substantially snakingly wound on the plates (2, 7, 9), defined by the filtering tracts (6a, 6b, 6c, 6d) in contact with the respective cavities (5, 8, 10, 11) and functioning as separating walls between the liquid to be filtered and the filtered liquid, a first series of connecting tracts (6') and a second series of connecting tracts (6") being equally sub-divided at opposite left and right ends of the filtering tracts (6a, 6b, 6c, 6d);
means for guiding (13) engaging the belt (6) in order to guide the belt (6) in a substantially snaking (S) progression in a direction which favours a positioning of the filtering tracts of belt (6a, 6b, 6c, 6d) on the respective cavities (5, 8, 10, 11);
**characterised in that** each tract of belt (6) belonging to at least one of the series of connecting tracts (6', 6") at least partially covers a side of a respective filtration chamber (14, 15).

2. The continuous-belt type filter pack of claim 1, **characterised in that** at least one of the two series of connecting tracts (6', 6") of the belt is positioned internally of the sheet-form development of the plates.

3. The continuous-belt type filter pack of any one of the preceding claims, **characterised in that** the plates (2, 7, 9) exhibit a substantially parallelepiped shape, each exhibiting an upper surface (20) and a lower surface (21), on which respective filtering tracts (6a, 6b, 6c, 6d) of the belt (6) rest, and also exhibiting a first and a second lateral surface (18, 19) having a smallest surface area, and also exhibiting a front surface (16) and a back surface (17).

4. The continuous-belt type filter pack of any one of the preceding claims, **characterised in that** the filtering tracts (6a, 6b, 6c, 6d) exhibit a smaller surface area with respect to an area below the upper surface (20) and lower surface (21) of the plates (2, 7, 9).

5. The continuous-belt type filter pack of any one of the preceding claims; **characterised in that** the second series of connecting tracts (6") is internal of the plates (2, 7, 9).

6. The continuous-belt type filter pack of any one of the preceding claims, **characterised in that** each tract belonging to the first series of connecting tracts (6') is preferably tangential to a same lateral surface (19) of each plate (2, 7, 9).

7. The continuous-belt type filter pack of any one of the preceding claims, **characterised in that** the means for guiding (13) comprise:
a first plurality of primary rollers (22, 23, 24), engaged on the filtering tracts of belt (6a, 6b, 6c, 6d) for facilitating the resting of the filtering tracts on the respective cavities (5, 8, 10, 11);
a second plurality of auxiliary rollers (25, 26, 27) engaged on the remaining parts of belt (6), for reducing friction phenomena during running of the belt (6).

8. The continuous-belt type filter pack of claim 7, **characterised in that** the first plurality of rollers is defined by a first roller (22), a second roller (23) and a third roller (24).

9. The continuous-belt type filter pack of claim 7, **characterised in that** the second plurality of rollers is defined by a fourth roller (25), a fifth roller (26) and a sixth roller (27).

10. The continuous-belt type filter pack of any one of the preceding claims, **characterised in that** the first upper cavities (5, 10) exhibit a substantially parallelepiped shape, defining a first bottom (28), preferably having a quadrangular perimeter, from which a first pair of transversal walls (29, 30) and a first pair of longitudinal walls (31, 32) develop.

11. The continuous-belt type filter pack of any one of the preceding claims, **characterised in that** each second lower cavity (8, 11) is defined by a second bottom (33), preferably having a quadrangular perimeter, from when a second pair of longitudinal walls (34, 35) and a second pair of transversal walls (36, 37) develop, one wall (36) of the second pair of transversal walls exhibiting a first seating (38), the other wall (37) of the second pair of transversal walls exhibiting a second seating (39) and a third seating (40).

12. The continuous-belt type filter pack of claim 11, **characterised in that** the first, second and third seatings (38, 39, 40) are defined by respective steps which develop externally of the second bottom (33).

13. The continuous-belt type filter pack of claim 1.1, **characterised in that** the first seating (38) is substantially coplanar to the second seating (39).

14. The continuous-belt type filter pack of claim 11, **characterised in that** the third seating (40) is contiguous to the second seating (39) and develops externally of the second seating (39) and the second bottom (33).

15. The continuous-belt type filter pack of any one of the preceding claims, **characterised in that** the first roller (22) is housed in the first seating (38).

16. The continuous-belt type filter pack of any one of the preceding claims, **characterised in that** the second roller (23) is housed in the second seating (39).

17. The continuous-belt type filter pack of any one of the preceding claims, **characterised in that** the sixth roller (27) is housed in the third seating (40).

18. The continuous-belt type filter pack of any one of the preceding claims, **characterised in that** the third roller (24) is located on the upper surface of the plates (2, 9) by a first transversal wall (29).

19. The continuous-belt type filter pack of any one of the preceding claims, **characterised in that** the plates (2, 7, 9) exhibit on one side thereof a fourth and a fifth seating (41, 42) afforded at two edges obtained by an intersection of the upper surface (20) and the lower surface (21) with one of the lateral surfaces (19).

20. The continuous-belt type filter pack of any one of the preceding claims, **characterised in that** the fourth roller (25) and the fifth roller (26) are housed in the fourth seating (41) and the fifth seating (42).

21. The continuous-belt type filter pack of any one of the preceding claims, **characterised in that** the fourth roller (25) and the fifth roller (26) are located in proximity of a first transversal wall (30).

22. The continuous-belt type filter pack of any one of the preceding claims, **characterised in that** the inlet (3) is defined, when the plates (2, 7, 9) are located in the closed position, by a single conduit transversally crossing the plates (2, 7, 9) and afforded in the space between the front surface (16) of each plate (2, 5, 11) and the longitudinal walls (32, 35) of the upper chambers (5, 10) and the lower chambers (8, 11).

23. The continuous-belt type filter pack of any one of the preceding claims, **characterised in that** the inlet (3) is in communication with each respective upper cavity (8, 13) via a respective first branch (3a) which opens above the upper cavities (8, 13) and above the respective portions of belt on a same side of the longitudinal walls (25, 30).

24. The continuous-belt type filter pack of any one of the preceding claims, **characterised in that** the outlet (4) is defined, when the plates (2, 5, 11) are located in the closed position, by a vertically-developing single conduit which transversally crosses the plates (2, 5, 11) and is afforded in the space between the back surfaces (17) of each plate (2, 5, 11), and the longitudinal walls (31, 34) of the upper chambers (5, 10) and the lower chambers (8, 11).

25. The continuous-belt type filter pack of any one of the preceding claims, **characterised in that** the outlet (4) is in communication with each cavity (5, 8, 12, 13) via a respective second branch (4a) terminating on the bottom (22, 27) of each cavity (5, 8, 10, 11).

26. A filtering machine, comprising:
a pump (P) for removing liquid to be filtered;
**characterised in that** it comprises a plate pack (1) exhibiting a bottom plate (2), a top plate (7) and a plurality of intermediate plates (11), as in claims from 1 to 25.
